# EUROPEAN PATENT SPECIFICATION

(11) **EP 2 540 459 B1**
(45) Date of publication and mention of the grant of the patent: **24.07.2013**
(21) Application number: 12173543.5
(22) Date of filing: 26.06.2012
(51) Int. Cl.: B26B 13/26, B26B 13/28

(54) **Cutting tool**
Schneidewerkzeug
Outil de coupe

(30) Priority: 30.06.2011 FI 20115689
(43) Date of publication of application: 02.01.2013
(73) Proprietor: Iittala Group OY AB, 00560 Helsinki (FI)
(72) Inventor: Savolainen, Heikki, 00560 Helsinki (FI); Holm, Carl-Olof, 00560 Helsinki (FI)
(74) Representative: Holmström, Stefan Mikael

(56) References cited:
- WO-A1-96/31326
- DE-U1- 8 716 229
- US-B2- 6 941 663

## Description

### BACKGROUND OF THE INVENTION

### FIELD OF THE INVENTION

This invention relates to a cutting tool and in particular to a cutting tool having an improved cutting performance.

### DESCRIPTION OF PRIOR ART

Previously there is known a cutting tool with a first handle fixedly attached to a first blade, and with a second handle and a second blade pivotably attached to each other at a pivot attaching also the first handle and the first blade to the second handle and the second blade. Such a cutting tool is shown in US 6 941 663.

In this known cutting tool, a second pivot is arranged at a distance from the first pivot to attach the second handle and the second blade pivotably to each other. In this way the second pivot makes it possible to transmit the force generated by a user on the handles to the blades as an optimal and maximal cutting force.

A problem with the prior art solution is, however, that as the cutting force increases the forces applied by the user on the handles tend to bend the material of the cutting tool as the handles, the blades and/or the pivot points yield. Such yielding can affect the distance between the blades resulting in a situation where the cutting tool no longer cuts the desired material efficiently.

### SUMMARY OF THE INVENTION

An object of the present invention is to solve the above-mentioned drawback and to provide a novel cutting tool capable of efficient cutting with a maximal cutting force. This object is achieved with the cutting tool of independent claim 1.

The use of a limiter in an overlapping region of a back end of the second blade and the second handle makes it possible to prevent at least that the back end moves away from the second handle in an axial direction of the first pivot. Therefore, possible yielding of the material in the cutting tool does not have any negative impact on the distance between the blades during cutting. The user may, therefore, excess a significant force on the handles of the cutting tool, which leads to an optimal cutting force and efficient cutting of the material being cut with the cutting tool.

In this context the term "overlapping" region refers to a region where a surface of the second handle and the back end extend in a side-by-side relation allowing movement of the back end sideways in relation to the second handle during the use of the cutting tool.

Preferred embodiments of the invention are disclosed in the dependent claims.

### BRIEF DESCRIPTION OF DRAWINGS

In the following the present invention will be described in more detail by way of example and with reference to the attached drawings, in which

Figures 1 to 4 illustrate a first embodiment of a cutting tool,

Figures 5 and 6 illustrate a second embodiment of a cutting tool, and

Figures 7 and 8 illustrate a third embodiment of a cutting tool.

### DESCRIPTION OF AT LEAST ONE EMBODIMENT

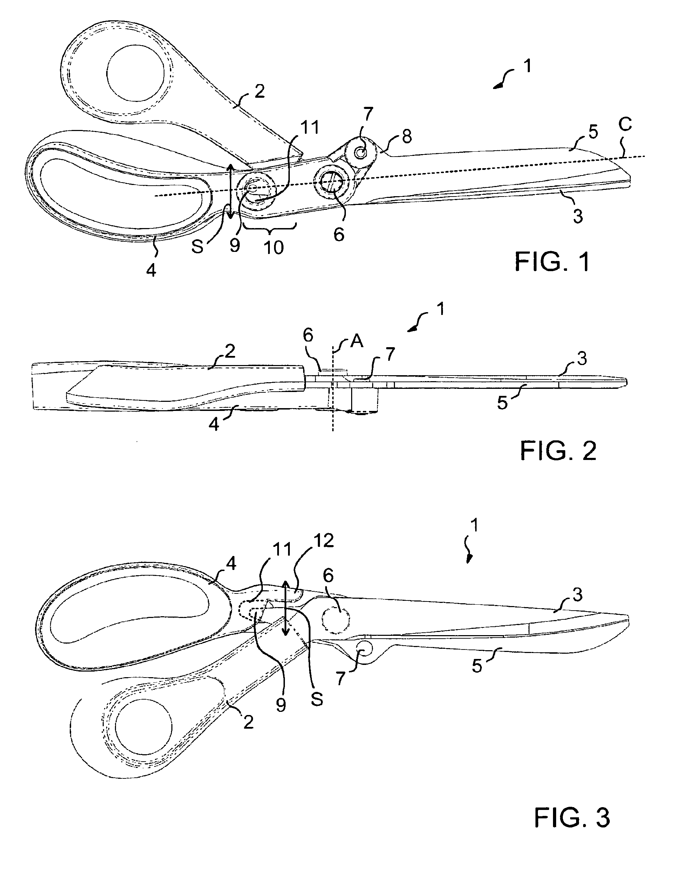

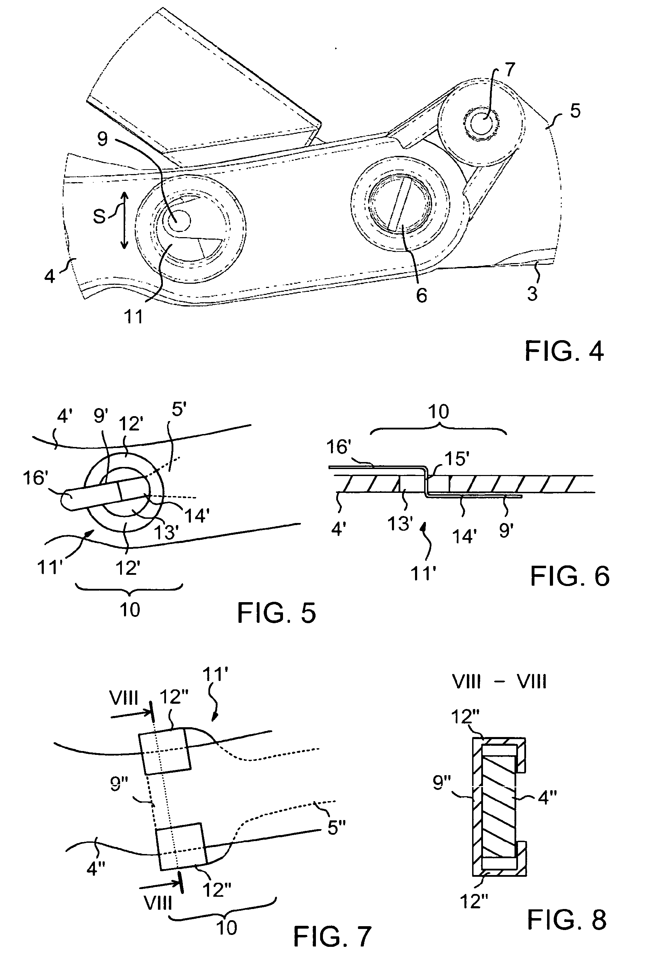

Figures 1 to 4 illustrate a first embodiment of a cutting tool 1 which in this example consists of a pair of scissors. Figure 1 is a view from one side, Figure 2 from above, Figure 3 from a second side, and Figure 4 is an enlargement of the region where the different parts of the cutting tool are attached to each other.

The cutting tool 1 comprises a first handle 2 which is fixedly attached to a first blade 3. The first handle 2 can be of plastic and the first blade 3 of steel, for instance. A cutting edge is arranged to the first blade in a conventional matter. The first handle 2 comprises a distal end (in relation to the first blade) with a loop for receiving a thumb of a user while the cutting tool is used.

The cutting tool 1 also comprises a second handle 4 and a second blade 5. The second handle 4 can be of plastic and the second blade 5 of steel, for instance. A cutting edge is arranged to the second blade in a conventional matter. The second handle 4 comprises in a distal end (in relation to the second blade) a loop for receiving one or more fingers (other than the thumb) of a user while the cutting tool is used.

The second handle 4 and the second blade 5 are not fixedly attached to each other. Instead, they are pivotably attached to each other and also pivotably attached to the first handle 2 and to the first blade 3 by a first pivot 6, which may be implemented by a screw or rivet extending through the cutting tool in an axial direction A. The second handle 4 and the second blade 5 are additionally pivotably attached to each other by a second pivot 7, which may also be implemented by a screw or rivet extending through the second handle and the second blade. Such a construction with two pivots 6 and 7 makes it possible to increase the cutting force. In this connection the term "pivotably attached" should be understood as an attachment between two parts that allows the parts to rotate in relation to each other, and that prevents all other movement between the parts in relation to each other.

The second pivot 7 is arranged at a location where the elongated second blade 5 is provided with a wider section 8. As illustrated in the figures, the second pivot 7 point is located at a distance from the first pivot point 6 and further away from a back end 9 of the second blade 5 than the first pivot point 6. Preferably the wider section 8 protrudes from a center line C of the second blade 5 towards the side of the first handle 2 intended to be used by the thumb of the user. In this way the wider section 8 is in practice located in an upper part of the cutting tool during use, where it does not block the material being cut from passing smoothly below the cutting tool 1.

The back end 9 of the second blade 5 overlaps the second handle 4 in an overlapping region 10. In this region 10 the second handle 4 and the back end 9 extend in a side-by-side relation allowing a sideway S movement of the back end 9 in relation to the second handle 5 during the use of the cutting tool 1, provided that a sufficient force leading to yielding is applied by the user. In order to avoid that such yielding leads to a situation where the distance between the blades 3 and 5 changes in the axial direction of the first pivot 6, a limiter 11 is arranged to the cutting tool.

In the embodiment of Figures 1 to 4, the limiter 11 consists of a recess or pocket provided in the second handle 4, into which the back end 9 penetrates. The height of the recess in the axial direction A of the first pivot 6 substantially corresponds to the thickness of the back end 9 in the axial direction A of the first pivot 1. In the overlapping region 10, any movement in the axial direction A of the first pivot 1 between the back end 9 and the second handle 4 can, thus, be prevented. Additionally, the width of the recess or pocket is larger than the width of the back end 9 such that the limiter allows the back end 9 to move sideways S in relation to the second handle 4. The possibility to move sideways ensures that the force directed to the handles 2 and 4 by the user is transmitted to the blades via the first and second pivots 6, 7 and not via the back end 9 of the second blade and the handle 4 (which would lead to a reduced cutting force).

It is possible that the limiter 11 prevents the back end 9 both from moving towards the second handle 4 and away from the second handle 4 in the axial direction A of the first pivot. This is, however, not necessary in all embodiments. Instead as illustrated in the embodiment of Figures 1 to 3, it is sufficient that the limiter 11 prevents the back end 9 at least from moving away from the second handle 4 in the axial direction A of the first pivot. As can be seen in Figures 1 to 3, a hole has been arranged into second handle 4 at the location of the back end and consequently this hole gives room for the back end 9 to move towards the second handle in the axial direction of the first pivot 6.

In addition to the limiter 11, the cutting tool 1 of Figures 1 to 4 is also provided with a side preventer 12 limiting sideway S movements of the back end 9 in relation to the second handle 4 to a predetermined distance. In this example the side preventer 12 consists of a protrusion provided in the second handle which comes into contact with the back end 9 of the second blade 5 once the cutting force has increased to such an extent that significant yielding occurs in the handle 4, blade 3 and/or pivots 6 and 7. During such significant yielding the side preventer 12 ensures that the yielding cannot continue unlimited. Therefore, the side preventer 12 is arranged at a predetermined distance from the normal location of the back end 9, in which case normal refers to a location where the back end 9 is (in relation to the second handle 4) while the cutting tool is not used.

Figures 5 and 6 illustrate a second embodiment of a cutting tool. The embodiment of Figures 5 and 6 is very similar to the one explained in connection with Figures 1 to 4. Therefore, the embodiment of Figures 5 and 6 will mainly be explained by pointing out the differences between these embodiments.

Figures 5 and 6 only illustrate a part of the second handle 4' and the back end 9' of the second blade 5' in the overlapping region 10. In this embodiment the limiter 11' consists of a hole 13' through the second handle 4' and a curved section on the back end 9' of the second blade, the curved section comprising a first section 14' extending substantially parallel with a first surface of the second handle 4', a second section 15' continuing from the first section 14' and protruding through the hole 13', and a third section 16' continuing from the second section and extending substantially parallel with a second surface of the second handle 14'. Contact between the first section 14' and the second handle 4', and the second section 16' and the second handle 4', respectively, prevent the back end 9' from moving in an axial direction of the first pivot in relation to the second handle 4'.

In the embodiment of Figures 5 and 6, the sides of the hole 13' function as a side preventer 12' limiting sideway movements of the back end 9' in relation to the second handle 4' to a predetermined distance.

Figures 7 and 8 illustrate a third embodiment of a cutting tool. The embodiment of Figures 7 and 8 is very similar to the one explained in connection with Figures 1 to 4. Therefore the embodiment of Figures 7 and 8 will be mainly explained by pointing out the differences between these embodiments.

Figures 7 and 8 only illustrate a part of the second handle 4" and the back end 9" of the second blade 5" in the overlapping region 10. In this embodiment the limiter 11" consists of a section of the back end with a width larger than the width of the second handle 4" (in this part of the handle) and with opposite side protrusions 12" initially extending in an axial direction A of the first pivot 6 and continuing as sections overlapping the second handle 4", whereby the section of the back end 9" and the protrusions 12" surround the second handle 5" on four sides of the second handle 5". In this connection "surround" does not require that the second handle is completely surrounded, as there may be a gap between the side protrusions 12", for instance, as illustrated in Figures 7 and 8.

The protrusions 12" also function as a side preventer 12" limiting sideway movements of the back end 9" in relation to the second handle 4" to a predetermined distance.

It is to be understood that the above description and the accompanying figures are only intended to illustrate the present invention. It will be obvious to a person skilled in the art that the invention can be varied and modified without departing from the scope of the invention.

## Claims

1. A cutting tool (1) comprising:
a first handle (2),
a first blade (3) with a cutting edge, the first blade being fixedly attached to the first handle (2),
a second handle (4, 4', 4"),
a second blade (5, 5', 5") with a cutting edge,
a first pivot (6) attaching the first blade (3) and the first handle (2) pivotably to the second handle (4, 4', 4") and the second blade (5, 5', 5"), the second handle (4, 4', 4") and second blade (5, 5', 5") are pivotably attached to each other at the first pivot (6), and
a second pivot (7) attaching the second handle (4, 4', 4") and the second blade (5, 5', 5") pivotably to each other, the second pivot (7) is located at a distance from the first pivot (6), **characterized in that**
the second blade (5, 5', 5") has a back end (9, 9', 9") overlapping the second handle (4, 4', 4") in an overlapping region (10),
in the overlapping region (10) the cutting tool (1) comprises a limiter (11, 11', 11 ") allowing the back end (9, 9', 9") to move sideways (S) in relation to the second handle (4, 4', 4"') when a sufficient force leading to yielding is applied and preventing the back end (9, 9', 9") at least from moving away from the second handle (4, 4', 4") in an axial direction (A) of the first pivot (6), wherein the limiter comprises a side preventer (12, 12', 12") limiting sideway movements of the back end (9, 9', 9") in relation to the second handle (4, 4', 4") to a predetermined distance when significant yielding occurs in the second handle, the second blade or in the first or in the second pivot.

2. The cutting tool according to claim 1. **characterized in that** the limiter (11) consists of a recess provided in the second handle (4) into which the back end (9) penetrates, the height of the recess in the axial direction (A) of the first pivot (6) substantially corresponding to the thickness of the back end (9) in the axial direction (A) of the first pivot (6), and the width of the recess is larger than the width of the back end (9) for allowing the back end to move sideways (S) in relation to the second handle (4).

3. The cutting tool according to claim 1, **characterized in that** the limiter (11') consists of a hole (13') through the second handle and a curved section on the back end (9') of the second blade (5'), the curved section comprising a first section (14') extending substantially parallel with a first surface of the second handle (4'), a second section (15") continuing from the first section and protruding through the hole (13'), and a third section (16') continuing from the second section and extending substantially parallel with a second surface of the second handle (4').

4. The cutting tool according to claim 1, **characterized in that** that the limiter (11 ") consists of a section of the back end (9") with a width larger than the width of the second handle (4") in this part of the second handle and with opposite side protrusions (12") initially extending in an axial direction (A) of the first pivot (6) and continuing as sections overlapping the second handle (4"), whereby the section of the back end (9") and the protrusions (12") surround the second handle (4") on four sides of the second handle.

5. The cutting tool according to one of claims 1 to 4, **characterized in that** the second pivot (7) is located further away from the back end (9, 9', 9") of the second blade (5, 5', 5") than the first pivot (6).

6. The cutting tool according to one of claims 1 to 5, **characterized in that** the second blade (5, 5', 5") is elongated and provided with a wider section (8) in a middle part of the second blade, and **in that** the second pivot (7) is located in the wider section (8).

7. The cutting tool according to one of claims 1 to 6, **characterized in that** said cutting tool (1) is a pair of scissors.

## Patentansprüche

1. Scherwerkzeug (1) mit:
einem ersten Griff (2),
einer ersten Klinge (3) mit einer Scherkante, wobei die erste Klinge an dem ersten Griff (2) fest befestigt ist,
einem zweiten Griff (4, 4', 4"),
einer zweiten Klinge (5, 5', 5") mit einer Scherkante,
einem ersten Gelenk (6), das die erste Klinge (3) und den ersten Griff (2) drehbar an dem zweiten Griff (4, 4', 4") und der zweiten Klinge (5, 5', 5") befestigt, wobei der zweite Griff (4, 4', 4") und die zweite Klinge (5, 5', 5") an dem ersten Gelenk (6) drehbar aneinander befestigt sind, und
einem zweiten Gelenk (7), das den zweiten Griff (4, 4', 4") und die zweite Klinge (5, 5', 5") drehbar aneinander befestigt, wobei sich das zweite Gelenk (7) in einem Abstand von dem ersten Gelenk (6) befindet, **dadurch gekennzeichnet,dass**
die zweite Klinge (5, 5', 5") ein hinteres Ende (9, 9', 9") hat, das den zweiten Griff (4, 4', 4") in einem überlappenden Bereich (10) überlappt,
das Scherwerkzeug (1) in dem überlappenden Bereich (10) einen Begrenzer (11, 11', 11") aufweist, der dem hinteren Ende (9, 9', 9") ermöglicht, sich seitwärts (S) in Bezug auf den zweiten Griff (4, 4', 4"') zu bewegen, wenn eine ausreichende, zur Biegung führende Kraft angewandt wird, und der das hintere Ende (4, 4', 4"') daran verhindert, sich zumindest weg von dem zweiten Griff (4, 4', 4"') in Axialrichtung (A) des ersten Gelenks (6) zu bewegen, wobei der Begrenzer eine Seitensperre (12, 12', 12") aufweist, die Seitwärtsbewegungen des hinteren Endes (9, 9', 9") in Bezug auf den zweiten Griff (4, 4', 4"') auf einen vorbestimmten Abstand begrenzt, wenn erhebliche Biegung in dem zweiten Griff, der zweiten Klinge oder in dem ersten oder zweiten Gelenk stattfindet.

2. Scherwerkzeug nach Anspruch 1, **dadurch gekennzeichnet, dass** der Begrenzer (11) aus einer in dem zweiten Griff (4) vorgesehenen Ausnehmung besteht, in die das hintere Ende (9) eindringt, wobei die Höhe der Ausnehmung in Axialrichtung (A) des ersten Gelenks (6) wesentlich der Dicke des hinteren Endes (9) in Axialrichtung (A) des ersten Gelenks (6) entspricht und die Breite der Ausnehmung größer als die Breite des hinteren Endes (9) ist, so dass dem hinteren Ende (9) ermöglicht wird, sich seitwärts (S) in Bezug auf den zweiten Griff (4) zu bewegen.

3. Scherwerkzeug nach Anspruch 1, **dadurch gekennzeichnet, dass** der Begrenzer (11') aus einer Bohrung (13') durch den zweiten Griff und einem gebogenen Abschnitt am hinteren Ende (9') der zweiten Klinge (5') besteht, wobei der gebogene Abschnitt einen ersten Abschnitt (14'), der sich wesentlich parallel zu einer ersten Oberfläche des zweiten Griffs (4') erstreckt, einen zweiten Abschnitt (15"), der von dem ersten Abschnitt weitergeht und durch die Bohrung (13') hervorragt, und einen dritten Abschnitt (16'), der von dem zweiten Abschnitt weitergeht und sich wesentlich parallel zu einer zweiten Oberfläche des zweiten Griffs (4') erstreckt, aufweist.

4. Scherwerkzeug nach Anspruch 1, **dadurch gekennzeichnet, dass** der Begrenzer (11 ") aus einem Abschnitt des hinteren Endes (9") besteht, dessen Breite größer als die Breite des zweiten Griffs (4") in diesem Teil des zweiten Griffs ist und dessen gegenüberliegende Seitenvorsprünge (12") sich zunächst in Axialrichtung (A) des ersten Gelenks (6) erstrecken und als den zweiten Griff (4") überlappende Abschnitte weitergehen, wobei der Abschnitt des hinteren Endes (9") und die Vorsprünge (12") den zweiten Griff (4") auf vier Seiten des zweiten Griffs umgeben.

5. Scherwerkzeug nach einem der Ansprüche 1 bis 4, **dadurch gekennzeichnet, dass** sich das zweite Gelenk (7) weiter weg von dem hinteren Ende (9, 9', 9") der zweiten Klinge (5, 5', 5") als das erste Gelenk (6) befindet.

6. Scherwerkzeug nach einem der Ansprüche 1 bis 5, **dadurch gekennzeichnet, dass** die zweite Klinge (5, 5', 5") länglich und mit einem breiteren Abschnitt (8) in einem Mittelteil der zweiten Klinge versehen ist und dass sich das zweite Gelenk (7) in dem breiteren Abschnitt (8) befindet.

7. Scherwerkzeug nach einem der Ansprüche 1 bis 6, **dadurch gekennzeichnet, dass** das besagte Scherwerkzeug (1) eine Schere ist.

## Revendications

1. Outil de coupe (1) comprenant :
une première poignée (2) ;
une première lame (3) avec un bord de coupe, la première lame étant fixée de manière fixe sur la première poignée (2) ;
une seconde poignée (4, 4', 4") ;
une seconde lame (5, 5 ', 5 ") avec un bord de coupe ;
un premier pivot (6) fixant la première lame (3) et la première poignée (2) de manière pivotante sur la seconde poignée (4, 4', 4") et sur la seconde lame (5, 5', 5"), la seconde poignée (4, 4', 4") et la seconde lame (5, 5', 5") sont fixées l'une à l'autre de manière pivotante au niveau du premier pivot (6) ; et
un second pivot (7) fixant la seconde poignée (4, 4', 4") et la seconde lame (5, 5', 5") l'une à l'autre de manière pivotante, le second pivot (7) se situant à une distance du premier pivot (6), **caractérisé en ce que** :
la seconde lame (5, 5', 5") présente une extrémité arrière (9, 9', 9") chevauchant la seconde poignée (4, 4', 4") dans une région de chevauchement (10) ;
dans la région de chevauchement (10), l'outil de coupe (1) comprend un dispositif de limitation (11, 11', 11") permettant à l'extrémité arrière (9, 9', 9") de se déplacer de côté (S) par rapport à la seconde poignée (4, 4', 4") quand une force suffisante menant à une flexion est appliquée et empêchant l'extrémité arrière (9, 9', 9") au moins de se déplacer en s'éloignant de la seconde poignée (4, 4', 4") dans une direction axiale (A) du premier pivot (6), dans lequel le dispositif de limitation comprend un dispositif de retenue latéral (12, 12', 12") limitant les déplacements de côté de l'extrémité arrière (9, 9', 9") par rapport à la seconde poignée (4, 4', 4") à une distance prédéterminée quand une flexion importante se produit dans la seconde poignée, dans la seconde lame ou dans le premier ou second pivot.

2. Outil de coupe selon la revendication 1, **caractérisé en ce que** le dispositif de limitation (11) se compose d'un renfoncement disposé dans la seconde poignée (4) dans lequel pénètre l'extrémité arrière (9), la hauteur du renfoncement dans la direction axiale (A) du premier pivot (6) correspondant sensiblement à l'épaisseur de l'extrémité arrière (9) dans la direction axiale (A) du premier pivot (6), et la largeur du renfoncement étant plus grande que la largeur de l'extrémité arrière (9) afin de permettre à l'extrémité arrière de se déplacer de côté (S) par rapport à la seconde poignée (4).

3. Outil de coupe selon la revendication 1, **caractérisé en ce que** le dispositif de limitation (11') se compose d'un trou (13') à travers la seconde poignée et d'une section incurvée sur l'extrémité arrière (9') de la seconde lame (5'), la section incurvée comprenant une première section (14') s'étendant sensiblement parallèlement à une première surface de la seconde poignée (4'), une deuxième section (15") continuant à partir de la première section et faisant saillie à travers le trou (13'), et une troisième section (16') continuant à partir de la deuxième section et s'étendant sensiblement parallèlement à une seconde surface de la seconde poignée (4').

4. Outil de coupe selon la revendication 1, **caractérisé en ce que** le dispositif de limitation (11 ") se compose d'une section de l'extrémité arrière (9") présentant une largeur plus grande que la largeur de la seconde poignée (4") dans cette partie de la seconde poignée, et des saillies latérales opposées (12") s'étendant au début dans une direction axiale (A) du premier pivot (6) et continuant en tant que sections chevauchant la seconde poignée (4"), grâce à quoi la section de l'extrémité arrière (9") et les saillies (12") entourent la seconde poignée (4") sur quatre côtés de la seconde poignée.

5. Outil de coupe selon l'une des revendications 1 à 4, **caractérisé en ce que** le second pivot (7) se situe plus loin en s'éloignant de l'extrémité arrière (9, 9', 9") de la seconde lame (5, 5', 5") que le premier pivot (6).

6. Outil de coupe selon l'une des revendications 1 à 5, **caractérisé en ce que** la seconde lame (5, 5', 5") est allongée et dotée d'une section plus large (8) dans une partie médiane de la seconde lame, et **en ce que** le second pivot (7) se situe dans la section plus large (8).

7. Outil de coupe selon l'une des revendications 1 à 6, **caractérisé en ce que** ledit outil de coupe (1) est une paire de ciseaux.
